# EUROPÄISCHE PATENTSCHRIFT

(11) **EP 0 744 523 B1**
(45) Veröffentlichungstag und Bekanntmachung des Hinweises auf die Patenterteilung: **11.02.2004**
(21) Anmeldenummer: 96107843.3
(22) Anmeldetag: 17.05.1996
(51) Int. Cl.: E06B 3/96, B23K 33/00

(54) **Rahmen für Fenster, Türen, Fassaden oder dergl. und Verfahren zu seiner Herstellung**
Frames for windows, doors, facades or the like and their manufacturing method
Cadres pour fenêtres, portes, façades ou similaires et leur méthode de fabrication

(30) Priorität: 24.05.1995 DE 19519174
(43) Veröffentlichungstag der Anmeldung: 27.11.1996
(73) Patentinhaber: NORSK HYDRO ASA, 0257 Oslo 2 (NO)
(72) Erfinder: Schulz, Harald Dr., 86381 Krumbach (DE)
(74) Vertreter: Dziewior, Joachim

(56) Entgegenhaltungen:
- DE-A- 2 441 969
- DE-A- 4 328 516
- DE-C- 663 132
- FR-A- 2 546 221
- US-A- 2 177 868
- US-A- 2 789 671
- WELDING AND METAL FABRICATION, Bd. 43, Nr. 10, Dezember 1975, HAYWARDS HEATH.; GB, Seiten 733-746, XP002011418 K.R.SPILLER: "POSITIONAL TIG WELDING OF ALUMINIUM PIPE"

## Beschreibung

Die Erfindung betrifft einen Rahmen für Fenster, Türen, Fassaden oder dergl., der aus vorzugsweise aus Metall - insbesondere aus Aluminium oder einer Aluminiumlegierung - bestehenden Hohlprofilstäben aufgebaut ist, die an ihren die Sichtflächen bildenden Seitenflächen einen Überzug in Form beispielsweise einer Oberflächenveredelung, einer Oxidhaut oder einer Oberflächenbeschichtung aufweisen und im aus Gehrungsecken gebildeten Eckbereich oder im Bereich eines T-Stoßes jeweils über eine Stoßverbindung zwischen stumpf aneinander stoßenden Verbindungsflächen miteinander verbunden sind.

Weiter betrifft die Erfindung ein Verfahren zur Herstellung derartiger Rahmen.

Üblicherweise werden derartige durch das Einsetzen von Eckwinkeln hergestellt, wobei diese Eckwinkel im Bereich der Gehrungsschnitte in die Hohlprofile eingeschoben und in den Hohlprofilen durch Schrauben, Kleber oder dergl. befestigt werden. Im Bereich der T-Stöße werden entsprechend Verbindungsstücke außenseitig an dem einen Hohlprofilstab angebracht, die dann in den aufzuschiebenden zweiten Hohlprofilstab vorstehen und darin entsprechend befestigt werden.

Grundsätzlich besteht auch die Möglichkeit, derartige Rahmen zu schweißen wie z.B. in DE-A- 43 28 516 dargestellt, wobei dann jedoch das Problem aufweist, daß im Bereich der Sichtflächen die Oberflächenveredelung beeinträchtigt wird, so daß in jedem Fall eine aufwendige Nachbearbeitung im Bereich der Schweißnähte erforderlich ist.

Der Erfindung liegt die Aufgabe zugrunde, einen Rahmen zu schaffen, der ohne die erwähnten Eckverbinder aufgebaut werden kann, gleichwohl eine hohe statische Festigkeit bietet, und Nacharbeiten an den Verbindungsflächen im Bereich der Sichtfläche überflüssig macht.

Diese Aufgabe wird nach der Erfindung dadurch gelöst, daß die Hohlprofilstäbe nur an den nicht die Sichtfläche bildenden Verbindungsflächen miteinander verschweißt sind, und daß die Stoßfuge im Bereich der Sichtflächen durch eine Dichtmasse geschlossen ist.

Der durch die Erfindung erreichte Vorteil besteht im wesentlichen darin, daß im Bereich der Sichtflächen keinerlei Schweißarbeiten ausgeführt werden, so daß dort die hiernach üblicherweise erforderlichen Nachbearbeitungen entfallen können. Lediglich ein Schließen der dort verbliebenen Stoßfuge durch Auf- bzw.

Einbringen einer Dichtmasse ist erforderlich. Durch geeignete Auswahl der verwendeten Dichtmasse kann jedoch dafür gesorgt werden, daß diese weitgehend vollständig in die Stoßfuge eindringt, so daß allenfalls geringe Reste an der Oberfläche der Sichtfläche entfernt werden müssen. Durch die Verschweißung werden in ausreichendem Maße die statischen und dynamischen Kräfte im Bereich der nicht sichtbaren Flächen übernommen, wobei zugleich diese Bereiche auch abgedichtet sind. Insgesamt wird dadurch gegenüber der herkömmlichen Verbindungstechnik eine größere Sicherheit bezüglich der Dichtigkeit und eine bessere Tragfähigkeit erreicht.

Da das Schweißen in den nicht sichtbaren Bereichen erfolgt, ist weder eine Vor- noch Nachbehandlung der Schweißzonen erforderlich, auch werden insgesamt geringere Anforderungen an die Schweißnahtqualität gestellt. Dies führt im Ergebnis darüber hinaus zu einer freieren Wahl des jeweils anzuwendenden Schweißverfahrens.

Im einzelnen sieht die Erfindung vor, daß die Dichtmasse von einem Klebstoff, insbes. einem Zwei-Komponenten-Epoxi-Kleber, einem Ein- oder Zwei-Komponenten-PUR-Kleber oder ähnlichem gebildet ist. Ebenso kann die Dichtmasse von einer Fugenfüllmasse wie Silikon, PUR, Polysulfid oder ähnlichem gebildet sein. Schließlich kann die Dichtmasse auch aus dünnflüssigem Silikon, einer Schmalfugenversiegelung oder ähnlichem bestehen.

Die Hohlprofilstäbe können durch ein Laserschweißverfahren, ein Mikro-Schweißverfahren (TIG, WIG, MIG) oder durch Stift-Reibschweißen verschweißt sein.

Zu beachten ist lediglich, daß sich keine zu große Wärmeeinflußzone einstellt, um Zerstörungen oder Beeinflussungen der Sichtfläche zuverlässig zu verhindern.

In verfahrensmäßiger Hinsicht sieht die Erfindung zur Herstellung eines Rahmens, der vorzugsweise aus Metall - insbesondere aus Aluminium oder einer Aluminiumlegierung - bestehenden Hohlprofilstäben aufgebaut ist, die an ihren die Sichtflächen bildenden Seitenflächen einen Überzug in Form beispielsweise einer Oberflächenveredelung, einer Oxidhaut oder einer Oberflächenbeschichtung aufweisen und im von Gehrungsecken gebildeten Eckbereich oder im Bereich eines T-Stoßes jeweils über stumpf aneinander stoßende Verbindungsflächen miteinander verbunden werden, vor, daß die Hohlprofilstäbe an den nicht die Sichtfläche bildenden Verbindungsflächen verschweißt werden und die Stoßfuge im Bereich der Sichtflächen durch eine Dichtmasse geschlossen wird.

Das Verfahren kann dabei so ablaufen, daß zunächst die Stoßfuge abgedichtet bzw. geklebt wird und anschließend die Verbindungsflächen miteinander verschweißt werden. Noch vorteilhafter dürfte es jedoch in der Regel sein, wenn zunächst die Verbindungsflächen miteinander verschweißt werden und anschließend die Stoßfuge abgedichtet bzw. geklebt wird. Der letztgenannte Verfahrensablauf gestaltet in der Regel das Auftragen der Dichtmasse einfacher, die lediglich auf den sichtbaren Spalt der Stoßfuge aufgebracht werden muß. Man läßt die Dichtmasse einziehen und kann anschließend unter Umständen noch an der Oberfläche verbliebene Reste entfernen. Insbesondere ist es hierbei nicht notwendig, zuvor die Sichtflächen genau bis zum Übergang zum Schweißbereich hin mit der Dichtmasse zu behandeln. Außerdem ist keine absolut präzise Abgrenzung zur vorher aufgebrachten Dichtmasse beim Schweißen erforderlich. Schließlich besteht auch nicht die Gefahr einer thermischen Zerstörung der Dichtmasse im Übergangsbereich zur Schweißnaht hin, wie dies beim nachträglichen Schweißen der Fall sein kann. Allerdings muß bei der nachträglichen Anbringung der Dichtmasse dafür gesorgt werden, daß die verwendete Dichtmasse ausreichend tief in den Spalt der Stoßfuge eindringen kann. Es dürfen also gewisse minimale Spaltbreiten nicht unterschritten werden.

Erfolgt die Abdichtung der Stoßfuge vor dem Verschweißen, so kann der Dicht- bzw. Klebstoff durch einen Pinsel, eine Rolle, einen Spachtel, einen Tampon oder einen Schwamm aufgebracht werden. Ebenso besteht die Möglichkeit, daß der Dicht- bzw. Klebstoff durch eine Düse aufgesprüht oder im Siebdruckverfahren aufgetragen wird.

Erfolgt die Abdichtung dagegen erst nach erfolgter Verschweißung der Hohlprofilstäbe, so sieht die Erfindung vor, daß der Dicht- bzw. Klebstoff in die Stoßfuge eingesprüht oder durch eine dünne Düse eingespritzt wird. Der Dicht- bzw. Klebstoff kann jedoch auch zum anschließenden Einziehen in die Stoßfuge in deren Bereich aufgesprüht, aufgestrichen oder aufgetragen werden.

Um eine eventuelle Verschmutzung der Sichtflächen im Randbereich der Stoßfuge zu verhindern, kann vor dem Auf- bzw. Einbringen der Dichtmasse der an die Stoßfuge seitlich angrenzende Bereich der Sichtfläche durch ein Klebeband oder dergl. abgedeckt werden.

Das Verschweißen der Hohlprofilstäbe erfolgt zweckmäßigerweise durch ein Naht-Schweißverfahren, wobei hier grundsätzlich alle der Schweißverfahren anwendbar sind. Insbesondere besteht hierbei auch die Möglichkeit, daß das Schweißen nur punktförmig erfolgt, wobei die Zonen zwischen den Punktschweißungen dann anschließend mit Dichtmasse gefüllt werden.

Um eine möglichst definiert vorgegebene Spaltbreite der Stoßfuge zu erreichen, wird im Rahmen der Erfindung vorgeschlagen, daß vor dem Schweißen die Stoßfuge im Bereich der Sichtfläche auf einen durch die Materialeigenschaft der Dichtmasse vorgegebene Spaltbreite eingestellt wird. Als vorteilhaft hat sich hierbei herausgestellt, wenn die Spaltbreite der Stoßfuge auf etwa 0,1 bis 0,5 mm eingestellt wird. Erleichtert wird dies im Rahmen der Erfindung dadurch, daß zur Einstellung der Spaltbreite die Stoßfuge im Bereich der Sichtfläche durch einen Stufensägeschnitt zurückgeschnitten wird. Die Hohlprofilstäbe können daher beim Schweißen unmittelbar auf Anschlag gebracht werden, ohne daß die Gefahr besteht, daß die Breite der Stoßfuge im Bereich der Sichtfläche - jedenfalls in einzelnen Bereichen - so schmal wird, daß das Eindringen der Dichtmasse nicht mehr gewährleistet ist.

Um schließlich den Schweißvorgang zu erleichtern, können vor der Eckverschweißung die im Bereich der Verbindungsflächen Nasen bildenden, von den Hohlprofilstäben senkrecht vorstehenden Profilleisten im Innen- und/oder Außenbereich der Ecke zurückgeschnitten bzw. -gefräst werden. Dadurch liegt die senkrecht zur Rahmenflöche verlaufende, zu verschweißende Zone über ihre gesamte Länge frei, so daß die Schweißung ohne Behinderung oder Unterbrechung durchgeführt werden kann.

Zweckmäßigerweise sind dabei die Profilleisten im Innenbereich der Ecke parallel zu ihrer Stirnfläche und im Außenbereich der Ecke unter einem Winkel von 90° gegenüber dem Gehrungsschnitt zurückgefräst.

Im folgenden wird die Erfindung an in der Zeichnung dargestellten Ausführungsbeispielen näher erläutert; es zeigen:

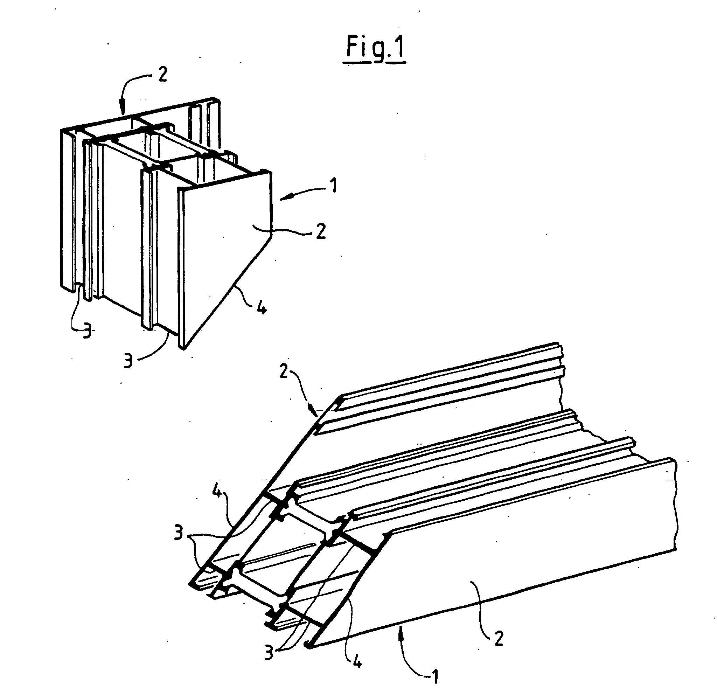

- Fig. 1: einen nur im Bereich der Eckverbindung dargestellten Rahmen für Fenster, Türen oder dergl.,

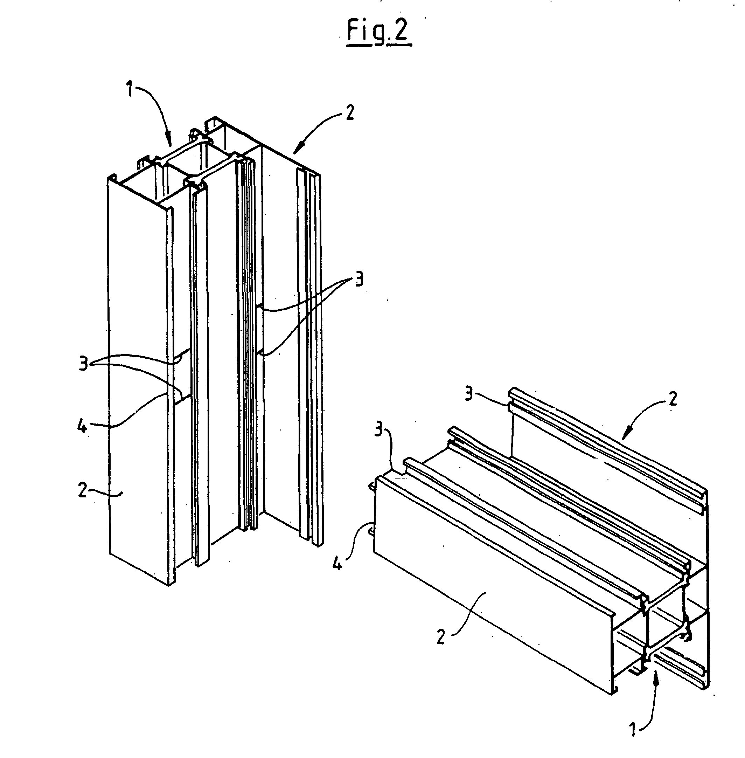

- Fig. 2: den Rahmen nach Fig. 1 im Bereich eines T-Stoßes,

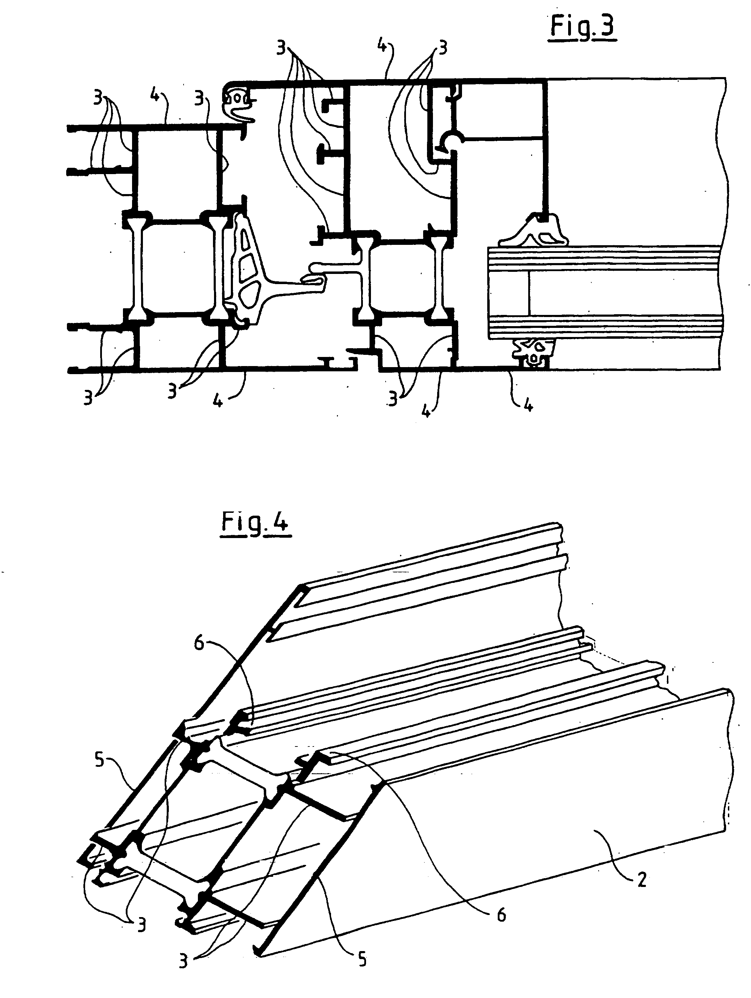

- Fig. 3: eine weitere Rahmendarstellung, im Schnitt,
- Fig. 4: einen auf Gehrung geschnittenen Hohlprofilstab mit im Bereich der Sichtfläche zurückgeschnittener Stoßfuge und im Bereich der Schweißflächen zurückgeschnittenen Profilleisten.

Der in der Zeichnung nur teilweise wiedergegebene Rahmen für Fenster, Türen, Fassaden oder dergl., besteht aus Metall, vorzugsweise aus Aluminium oder einer Aluminium-Legierung und ist aus Hohlprofilstäben 1 aufgebaut, die jeweils im Eckbereich auf Gehrung zugeschnitten sind. Diese Hohlprofilstäbe 1 sind üblicherweise an ihrer gesamten Oberfläche, auf jeden Fall aber an ihren die Sichtflächen 2 bildenden Seitenflächen mit einem Überzug in Form beispielsweise einer Oberflächenveredelung, einer Oxidhaut oder einer Oberflächenbeschichtung versehen.

Um beim Verbinden der stumpf aneinander stoßenden Verbindungsflächen miteinander Beschädigungen der Oberflächenveredelung zu vermeiden, sind die Hohlprofilstäbe nur an den nicht die Sichtfläche bildenden, grafisch kenntlich gemachten und mit 3 bezeichneten Verbindungsflächen miteinander verschweißt. Die verbleibende Stoßfuge 4 im Bereich der Sichtflächen 2 ist durch eine nicht dargestellte Dichtmasse geschlossen. Die Dichtmasse besteht beispielsweise aus einem Klebstoff, also z. B. einem Zwei-Komponenten-Epoxi-Kleber oder einem Ein- oder Zwei-Komponenten-PUR-Kleber. Ebenso kann die Dichtmasse auch von einer Fugenfüllmasse wie Silikon, PUR, Polysulfid oder ähnlichem gebildet sein. Je nach Breite des zu füllenden Spaltes kann die Dichtmasse auch aus dünnflüssigem Silikon bzw. einer Schmalfugenversiegelung bestehen.

Die Hohlprofilstäbe 1 werden durch ein Naht-Schweißverfahren miteinander verbunden. Hierfür bieten sich beispielsweise Laser-Schweißverfahren an, ebenso auch Mikro-Schweißverfahren wie Tungsten-Inert-Gas (TIG), Wolfram-Inert-Gas (WIG) und Metall-Inert-Gas (MIG). Schließlich läßt sich auch das sogenannte Stift-Reibschweißen erfolgreich einsetzen.

Beim Verbinden der Hohlprofilstäbe 1 kann entweder zunächst die Stoßfuge 4 an der Sichtfläche 2 abgedichtet und erst anschließend die Verschweißung der Verbindungsflächen 3 vorgenommen werden. Vorteilhafter wird in der Regel jedoch sein, wenn zunächst die Verbindungsflächen 3 miteinander verschweißt werden und anschließend die Stoßfuge 4 abgedichtet wird. Dies hat den Vorteil, daß nach der erfolgten Verschweißung die Dichtmasse einfacher aufgebracht werden kann, da diese bei geeigneter Auswahl bis hin zum Ende des Schweißbereiches kriecht. Wird dagegen die Dichtmasse vor dem Verschweißen aufgebracht, so muß beim anschließenden Verschweißen für eine sehr präzise Abgrenzung zur vorher aufgebrachten Dichtmasse gesorgt werden. Außerdem besteht u. U. die Gefahr einer thermischen Zerstörung der Dichtmasse im Übergangsbereich. Allerdings ist hierbei dafür zu sorgen, daß eine - der Viskosität und Oberflächenspannung der Dichtmasse - angepaßte Spaltbreite der Stoßfuge 4 vorhanden ist. Nur dann nämlich ist sicher gestellt, daß der gesamte Bereich bis hin zum Ende der Schweißnaht sicher abgedichtet wird. Hierzu kann der Dicht- bzw. Klebstoff in die Stoßfuge 4 eingesprüht oder durch eine dünne Düse eingespritzt werden. Unter Umständen genügt es jedoch auch, den Dicht- bzw. Klebstof zum anschließenden Einziehen in die Stoßfuge 4 in deren Bereich aufzusprühen, aufzustreichen oder aufzutragen. Um zu verhindern, daß Reste der Dichtmasse in dem an die Stoßfuge 4 seitlich angrenzenden Bereich der Sichtfläche 2 verbleiben, kann dieser vor dem Aufbringen der Dichtmasse durch jeweils ein an die Stoßfuge 4 anschließendes Klebeband oder dergl. abgedeckt werden.

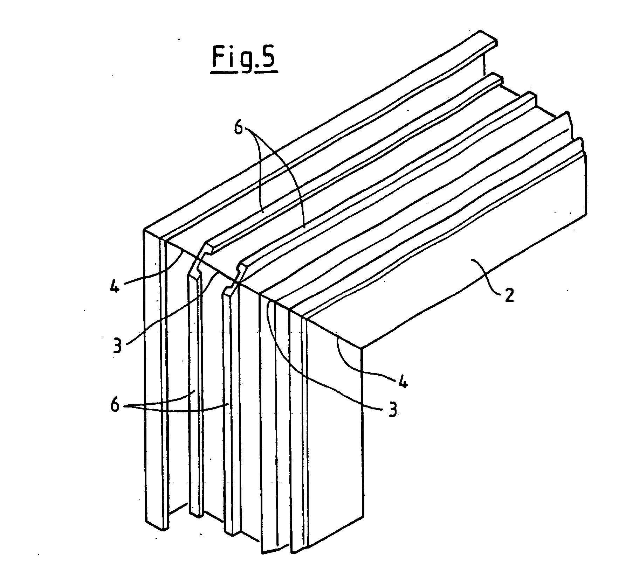

Die Spaltbreite der Stoßfuge 4 sollte einerseits so breit sein, um das Eindringen der Dichtmasse zu ermöglichen, andererseits aber nicht zu breit sein, um nicht störend aufzufallen. Günstig erscheinen Werte im Bereich von etwa 0,1 bis 0,5 mm. Um die jeweils gewünschte Breite sicher einzustellen, kann, wie dies in Fig. 4 dargestellt ist, die Stoßfuge 4 im Bereich der Sichtfläche durch einen Stufensägeschnitt zurückgeschnitten sein. Der zurückgeschnittene Bereich ist mit 5 bezeichnet. Dadurch können die Verbindungsflächen 3 beim Verschweißen unmittelbar in Anlage zueinander gebracht werden, wodurch sich die gewünschte Spaltbreite selbsttätig einstellt.

Weiter ist in Fig. 4 für den Innenbereich einer Ecke noch angedeutet, daß vor der Eckverschweißung die im Bereich der Stoßfuge Nasen bildenden, von den Hohlprofilstäben senkrecht vorstehenden Profilleisten 6 zurückgeschnitten bzw. gefräst sein können, um die Verschweißung zu erleichtern. Entsprechend zeigt Fig. 5 das Zurückschneiden der Profilleisten 6 für den Außenbereich der Ecke. Dort werden die Enden der Profilleisten 6 teilweise ohnehin weggefräst, um den von Profilleisten 6 gebildeten Treibstangenkanal an den Ecken zu öffnen und die Treibstange einschieben zu können.

In der Zeichnung sind die Schweißnähte bzw. Verbindungsflächen 3 jeweils durchgezogen wiedergegeben. Es besteht jedoch ebenso die Möglichkeit, längs dieser Linien - vorzugsweise äquidistante - Punktschweißungen vorzunehmen, wobei dann jedoch auch die Zonen zwischen den Punktschweißungen anschließend mit Dichtmasse gefüllt werden müssen.

## Patentansprüche

1. Rahmen für Fenster, Türen, Fassaden oder dergleichen, der aus vorzugsweise aus Metall - insbesondere aus Aluminium oder einer Aluminiumlegierung - bestehenden Hohlprofilstäben (1) aufgebaut ist, die an ihren die Sichtflächen (2) bildenden Seitenflächen einen Überzug in Form beispielsweise einer Oberflächenveredelung, einer Oxidhaut oder einer Oberflächenbeschichtung aufweisen und im aus Gehrungsecken gebildeten Eckbereich oder im Bereich eines T-Stoßes jeweils über eine Stoßverbindung zwischen stumpf aneinander stoßenden Verbindungsflächen (3) miteinander verbunden sind, **dadurch gekennzeichnet, daß** die Hohlprofilstäbe (1) nur an den nicht die Sichtfläche (2) bildenden Verbindungsflächen (3) miteinander verschweißt sind, und daß die Stoßfuge (4) im Bereich der Sichtflächen (2) durch eine Dichtmasse geschlossen ist.

2. Rahmen nach Anspruch 1, **dadurch gekennzeichnet, daß** die Dichtmasse von einem Klebstoff, insbesondere einem Zwei-Komponenten-Epoxi-Kleber, einem Ein- oder Zwei-Komponenten-PUR-Kleber oder ähnlichem gebildet ist.

3. Rahmen nach Anspruch 1, **dadurch gekennzeichnet, daß** die Dichtmasse von einer Fugenfüllmasse wie Silikon, PUR, Polysulfid oder ähnlichem gebildet ist.

4. Rahmen nach Anspruch 1, **dadurch gekennzeichnet, daß** die Dichtmasse von dünnflüssigem Silikon, einer Schmalfugenversiegelung oder ähnlichem gebildet ist.

5. Rahmen nach einem der Ansprüche 1 bis 4, **dadurch gekennzeichnet, daß** die Hohlprofilstäbe (1) durch ein Laserschweißverfahren, ein Mikro-Schweißverfahren (TIG, WIG, MIG) oder durch Stift-Reibschweißen verschweißt ist.

6. Verfahren zur Herstellung eines Rahmens nach den Ansprüchen 1 bis 5, der aus vorzugsweise aus Metall - insbesondere aus Aluminium oder einer Aluminiumlegierung - bestehenden Hohlprofilstäben (1) aufgebaut ist, die an ihren die Sichtflächen (2) bildenden Seitenflächen einen Überzug in Form beispielsweise einer Oberflächenveredelung, einer Oxidhaut oder einer Oberflächenbeschichtung aufweisen und im aus Gehrungsecken gebildeten Eckbereich oder im Bereich eines T-Stoßes jeweils über stumpf aneinander stoßende Verbindungsflächen (3) miteinander verbunden werden, **dadurch gekennzeichnet, daß** die Hohlprofilstäbe (1) an den nicht die Sichtfläche (2) bildenden Verbindungsflächen (3) verschweißt werden und die Stoßfuge (4) im Bereich der Sichtflächen (2) durch eine Dichtmasse geschlossen wird.

7. Verfahren nach Anspruch 6, **dadurch gekennzeichnet, daß** zunächst die Stoßfuge (4) abgedichtet bzw. geklebt wird und anschließend die Verbindungsflächen (3) miteinander verschweißt werden.

8. Verfahren nach Anspruch 6, **dadurch gekennzeichnet, daß** zunächst die Verbindungsflächen (3) miteinander verschweißt werden und anschließend die Stoßfuge (4) abgedichtet bzw. geklebt wird.

9. Verfahren nach Anspruch 7, **dadurch gekennzeichnet, daß** der Dicht- bzw. Klebstoff durch einen Pinsel, eine Rolle, einen Spachtel, einen Tampon oder einen Schwamm aufgebracht wird.

10. Verfahren nach Anspruch 7, **dadurch gekennzeichnet, daß** der Dicht- bzw. Klebstoff durch eine Düse aufgesprüht oder im Siebdruckverfahren aufgetragen wird.

11. Verfahren nach Anspruch 8, **dadurch gekennzeichnet, daß** der Dicht- bzw. Klebstoff in die Stoßfuge (4) eingesprüht oder durch eine dünne Düse eingespritzt wird.

12. Verfahren nach Anspruch 8, **dadurch gekennzeichnet, daß** der Dicht- bzw. Klebstoff zum anschließenden Einziehen in die Stoßfuge (4) in deren Bereich aufgesprüht, aufgestrichen oder aufgetragen wird.

13. Verfahren nach einem der Ansprüche 6 bis 12, **dadurch gekennzeichnet, daß** vor dem Auf- bzw. Einbringen der Dichtmasse der an die Stoßfuge (4) seitlich angrenzende Bereich der Sichtfläche (2) durch ein Klebeband oder dergleichen abgedeckt wird.

14. Verfahren nach einem der Ansprüche 6 bis 13, **dadurch gekennzeichnet, daß** das Verschweißen der Hohlprofilstäbe (1) durch ein Naht-Schweißverfahren erfolgt.

15. Verfahren nach einem der Ansprüche 6 bis 13, **dadurch gekennzeichnet, daß** das Schweißen nur punktförmig erfolgt, wobei die Zonen zwischen den Punktschweißungen anschließend mit Dichtmasse gefüllt werden.

16. Verfahren nach einem der Ansprüche 6 bis 15, **dadurch gekennzeichnet, daß** vor dem Schweißen die Stoßfuge (4) im Bereich der Sichtfläche (2) auf einen durch die Materialeigenschaft der Dichtmasse vorgegebene Spaltbreite eingestellt wird.

17. Verfahren nach Anspruch 16, **dadurch gekennzeichnet, daß** die Spaltbreite der Stoßfuge (4) auf etwa 0,1 bis 0,5 mm eingestellt wird.

18. Verfahren nach Anspruch 16 oder 17, **dadurch gekennzeichnet, daß** zur Einstellung der Spaltbreite die Stoßfuge (4) im Bereich der Sichtfläche (2) durch einen Stufensägeschnitt zurückgeschnitten wird.

19. Verfahren nach einem der Ansprüche 6 bis 18, **dadurch gekennzeichnet, daß** vor der Eckverschweißung die im Bereich der Verbindungflächen (3) Nasen bildenden, von den Hohlprofilstäben senkrecht vorstehenden Profilleisten (6) im Innen- und/oder Außenbereich der Ecke zurückgeschnitten bzw. -gefräst werden.

20. Verfahren nach Anspruch 19, **dadurch gekennzeichnet, daß** die Profilleisten (6) im Innenbereich der Ecke parallel zu ihrer Stirnfläche und im Außenbereich der Ecke unter einem Winkel von 90° gegenüber dem Gehrungsschnitt zurückgefräst sind.

## Claims

1. A frame for windows, doors, facades or the like, which is made up from hollow profile bars (1) which preferably comprise metal - in particular aluminium or an aluminium alloy - and which at their side surfaces forming the visible surfaces (2) have a coating in the form for example of a surface treatment, an oxide skin or a surface coating and which in the corner region formed from mitre corners or in the region of a T-joint are respectively connected together by way of a butting connection between connecting surfaces (3) which butt against each other, **characterised in that** the hollow profile bars (1) are welded together only at the connecting surfaces (3) which do not form the visible surface (2), and that the butting joint (4) is closed by a sealing mass in the region of the visible surfaces (2).

2. A frame according to claim 1 **characterised in that** the sealing mass is formed by an adhesive, in particular a two-component epoxy adhesive, a single- or two-component PUR adhesive or the like.

3. A frame according to claim 1 **characterised in that** the sealing mass is formed by a joint sealing mass such as silicone, PUR, polysulphide or the like.

4. A frame according to claim 1 **characterised in that** the seating mass is formed by low-viscosity silicone, a narrow joint sealing agent or the like.

5. A frame according to one of claims 1 to 4 **characterised in that** the hollow profile bars (1) are welded by a laser welding process, a micro-welding process (TIG, WIG, MIG) or by tack friction welding.

6. A process for the production of a frame according to claims 1 to 5 which is made up from hollow profile bars (1) which preferably comprise metal - in particular aluminium or an aluminium alloy - and which at their side surfaces forming the visible surfaces (2) have a coating in the form for example of a surface treatment, an oxide skin or a surface coating and which in the corner region formed from mitre corners or in the region of a T-joint are respectively connected together by way of connecting surfaces (3) which butt against each other, **characterised in that** the hollow profile bars (1) are welded at the connecting surfaces (3) which do not form the visible surface (2), and that the butting joint (4) is closed by a sealing mass in the region of the visible surfaces (2).

7. A process according to claim 6 **characterised in that** firstly the butting joint (4) is sealed off or glued and then the connecting surfaces (3) are welded to each other.

8. A process according to claim 6 **characterised in that** firstly the connecting surfaces (3) are welded to each other and then the butting joint (4) is sealed off or glued.

9. A process according to claim 7 **characterised in that** the sealing material or adhesive is applied by a brush, a roller, a spatula, a pad or a sponge.

10. A process according to claim 7 **characterised in that** the sealing material or adhesive is sprayed on by a nozzle or is applied by a screen printing process.

11. A process according to claim 8 **characterised in that** the sealing material or adhesive is sprayed into the butting joint (4) or is sprayed in through a thin nozzle.

12. A process according to claim 8 **characterised in that** the sealing material or adhesive is sprayed on, brushed on or applied in the region of the butting joint (4) to be subsequently drawn into same.

13. A process according to one of claims 6 to 12 **characterised in that** prior to the operation of applying or introducing the sealing mass the region of the visible surface (2), which laterally adjoins the butting joint (4), is covered by an adhesive strip or the like.

14. A process according to one of claims 6 to 13 **characterised in that** the operation of welding the hollow profile bars (1) is effected by a seam welding process.

15. A process according to one of claims 6 to 13 **characterised in that** the welding operation is effected only in spot form, wherein the zones between the spot welds are then filled with sealing mass.

16. A process according to one of claims 6 to 15 **characterised in that** prior to the welding operation the butting joint (4) is set in the region of the visible surface (2) to a gap width which is predetermined by the material property of the sealing mass.

17. A process according to claim 16 **characterised in that** the gap width of the butting joint (4) is set to about 0.1 to 0.5 mm.

18. A process according to claim 16 or claim 17 **characterised in that** for setting the gap width the butting joint (4) is cut back in the region of the visible surface (2) by a step saw cut.

19. A process according to one of claims 6 to 18 **characterised in that** prior to the corner welding operation the profile strips (6) which form noses in the region of the connecting surfaces (3) and which project perpendicularly from the hollow profile bars are cut back or milled in the inner and/or outer region of the corner.

20. A process according to claim 19 **characterised in that** the profile strips (6) are milled back in the inner region of the corner parallel to the end face thereof and in the outer region of the corner at an angle of 90° with respect to the mitre cut.

## Revendications

1. Cadre pour fenêtres, portes, façades ou similaires, qui est construit à partir de barres de profilé creux (1), de préférence métalliques, - notamment en aluminium ou en un alliage d'aluminium -, qui sur leurs faces latérales constituant les faces visibles (2) sont pourvues d'une couche de couverture sous la forme par exemple d'un traitement de surface, d'une couche d'oxyde ou d'un revêtement de surface et qui dans la région des angles à joint à onglet ou dans la région d'un assemblage en T, sont liées entre elles chaque fois par une jonction bout à bout entre des surfaces de liaison (3) aboutées, **caractérisé en ce que** les barres de profilé creux (1) sont soudées entre elles uniquement au niveau des surfaces de liaison (3) qui ne constituent pas la face visible (2) et **en ce que** l'ouverture de joint (4), dans la région des faces visibles (2), est obturée à l'aide d'une masse d'étanchéité.

2. Cadre selon la revendication 1, **caractérisé en ce que** la masse d'étanchéité est une colle, en particulier une colle époxy bi-composants, une colle PUR mono- ou bi-composants ou similaire.

3. Cadre selon la revendication 1, **caractérisé en ce que** la masse d'étanchéité est formée d'une masse de remplissage de joints, telle que du silicone, du PUR, du poly-sulfure ou similaire.

4. Cadre selon la revendication 1, **caractérisé en ce que** la masse d'étanchéité est formée de silicone fluide, d'un produit scellage pour joints étroits ou similaire.

5. Cadre selon une des revendications 1 à 4, **caractérisé en ce que** les barres de profilé creux (1) sont soudées par un procédé de soudage au laser, un procédé de micro-soudage (TIG, WIG, MIG) ou un procédé par friction de tiges.

6. Procédé de fabrication d'un cadre selon les revendications 1 à 5, qui est construit à partir de barres de profilé creux (1), de préférence métalliques, - notamment en aluminium ou en un alliage d'aluminium -, qui, sur leurs faces latérales constituant les faces visibles (2), sont pourvues d'une couche de couverture sous la forme par exemple d'un traitement de surface, d'une couche d'oxyde ou d'un revêtement de surface et qui dans la région des angles à joint à onglet ou dans la région d'un assemblage en T, sont liées entre elles chaque fois par un jonction bout à bout entre des surfaces de liaison (3) aboutées, **caractérisé en ce que** les barres de profilé creux (1) sont soudées au niveau des surfaces de liaison (3) qui ne constituent pas la face visible (2) et **en ce que** l'ouverture de joint (4), dans la région des faces visibles (2), est obturée à l'aide d'une masse d'étanchéité

7. Procédé selon la revendication 6, **caractérisé en ce que** d'abord on obture de manière étanche ou on colle l'ouverture de joint, puis on soude l'une à l'autre les surfaces de liaison (3).

8. Procédé selon la revendication 6, **caractérisé en ce que** d'abord on soude l'une à l'autre les surfaces de liaison (3) sont, puis on obture de manière étanche ou on colle l'ouverture de joint.

9. Procédé selon la revendication 7, **caractérisé en ce qu'**on applique le produit d'étanchéité ou la colle à l'aide d'un pinceau, d'un rouleau, d'un couteau, d'un tampon ou d'une éponge.

10. Procédé selon la revendication 7, **caractérisé en ce qu'**on pulvérise le produit d'étanchéité ou la colle à l'aide d'une buse ou on l'applique par un procédé sérigraphie.

11. Procédé selon la revendication 8, **caractérisé en ce qu'**on pulvérise le produit d'étanchéité ou la colle dans l'ouverture de joint (4) ou on l'injecte à l'aide d'une buse fine.

12. Procédé selon la revendication 8, **caractérisé en ce qu'**on pulvérise, on applique au pinceau ou on dépose le produit d'étanchéité ou la colle dans la région de l'ouverture de joint (4) pour sa pénétration dans l'ouverture de joint (4).

13. Procédé selon une des revendications 6 à 12, **caractérisé en ce qu'**avant l'application de la masse d'étanchéité, on couvre à l'aide de ruban adhésif la zone de la face visible (2) contiguë à l'ouverture de joint (4).

14. Procédé selon une des revendications 6 à 13, **caractérisé en ce que** le soudage des barres de profilé creux (1) a lieu par un procédé de soudge en cordon.

15. Procédé selon une des revendications 6 à 13, **caractérisé en ce que** le soudage a lieu seulement par points, les zones entre les points de soudure étant ensuite remplies de masse d'étanchéité.

16. Procédé selon une des revendications 6 à 15, **caractérisé en ce qu'**avant le soudage on règle l'ouverture de joint (4) dans la région de la face visible (2) à une largeur de fente qui est déterminée par les caractéristiques physiques de la masse d'étanchéité.

17. Procédé selon la revendication 16, **caractérisé en ce que** la largeur de fente de l'ouverture de joint (4) est réglée à environ 0,1 à 0,5 mm.

18. Procédé selon la revendication 16 ou 17, **caractérisé en ce que** pour régler la largeur de fente on recoupe l'ouverture de joint (4) dans la région de la face visible (2) par une coupe étagée.

19. Procédé selon une des revendications 6 à 18, **caractérisé en ce qu'**avant le soudage des angles, on recoupe ou on fraise dans la région intérieure et/ou extérieure de l'angle les cloisons de profilé (6) qui s'étendent verticalement sur les barres de profilé creux et forment des saillies dans la région des surfaces de liaison (3).

20. Procédé selon la revendication 19, **caractérisé en ce qu'**on taille par fraisage les cloisons de profilé (6) parallèlement à leur face frontale dans la région intérieure de l'angle et sous un angle de 90° par rapport à la coupe d'onglet dans la région extérieure de l'angle.
